**Europäisches Patentamt**

**European Patent Office**

**Office européen des brevets**

(19)

(11) Numéro de publication: **0 284 457 B1**

(12) **FASCICULE DE BREVET EUROPEEN**

(45) Date de publication du fascicule du brevet: **23.05.90**

(51) Int. Cl.⁵: **F16D 23/14**

(21) Numéro de dépôt: **88400396.3**

(22) Date de dépôt: **22.02.88**

(54) Perfectionnements aux tubes-guides disposés entre la boîte de vitesses et l'embrayage d'un véhicule et aux joints équipant de tels tubes-guides.

(30) Priorité: **24.02.87 FR 8702393**

(43) Date de publication de la demande:
**28.09.88 Bulletin 88/39**

(45) Mention de la délivrance du brevet:
**23.05.90 Bulletin 90/21**

(84) Etats contractants désignés:
**DE ES GB IT**

(56) Documents cités:
**FR-A- 2 305 639**
**FR-A- 2 333 160**
**US-A- 4 114 898**

(73) Titulaire: **HUTCHINSON, 2 rue Balzac, F-75008 Paris(FR)**

(72) Inventeur: **Braut, Patrick, 31 Rue de la Ste Emérance, F-49370 La Poueze(FR)**

(74) Mandataire: **Behaghel, Pierre et al, CABINET PLASSERAUD 84 rue d'Amsterdam, F-75009 Paris(FR)**

## Description

L'invention est relative aux tubes-guides épaulés destinés à recevoir la portion, de l'arbre de transmission d'un véhicule, disposée entre la boîte de vitesse et l'embrayage de ce véhicule.

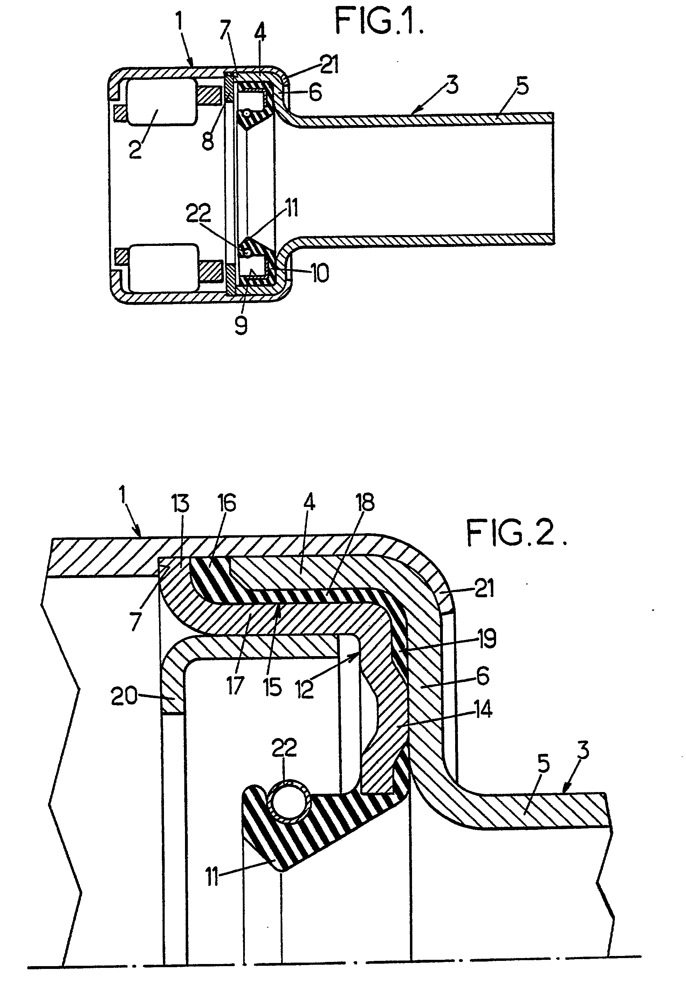

Un mode de réalisation d'un tel tube-guide connu avant l'invention a été schématisé sur la figure 1 ci-annexée en coupe axiale.

Comme visible sur cette figure 1, le tube-guide considéré est composé d'un premier tronçon tubulaire 1 propre à recevoir intérieurement le roulement 2 de sortie de la boîte et d'un second tronçon tubulaire épaulé 3 comprenant un bout de cylindre 4 relativement court emmanché jointivement dans le premier tronçon 1 et un bout de cylindre 5 relativement long et de plus petit diamètre que le précédent, propre à recevoir extérieurement le roulement de la butée d'embrayage, ces deux bouts étant raccordés l'un à l'autre par une collerette intermédiaire 6.

Dans les modes de réalisation connus de ces tubes-guides, la face cylindrique interne du premier tronçon tubulaire 1 comprend un ressaut de butée axiale 7 contre lequel est appliquée axialement une rondelle métallique 8, cette application axiale étant elle-même exercée par la tranche terminale du second tronçon 3.

En outre, l'extrémité axiale, du premier tronçon 1, qui recouvre la portion épaulée du second tronçon, est rabattue vers l'axe en 21 à des fins de sertissage sur cet épaulement.

La cavité annulaire délimitée à l'intérieur du tube-guide par la portion épaulée du second tronçon 3 et par la rondelle 8 est garnie d'un joint d'étanchéité à lèvre essentiellement composé lui-même d'une armature rigide 9 présentant une demi-section axiale en L et d'une garniture 10 en matériau élastomère longeant extérieurement la totalité de cette armature et terminée du côté de l'axe par une lèvre flexible 11 propre à être appliquée radialement contre l'arbre à étancher à l'aide d'un ressort 22.

Ce mode de réalisation présente l'inconvénient que l'étanchéité n'est pas correctement assurée, vis-à-vis du liquide de lubrification du roulement, au niveau de la liaison entre les deux tronçons tubulaires 1 et 3 : même si l'on prend soin d'interposer de la colle entre ces deux tronçons, il n'est pas rare que des fuites se fassent jour entre eux, donnant lieu à des évacuations involontaires d'huile au niveau de l'extrémité sertie du tronçon 1 sur l'épaulement qu'il entoure.

L'invention a pour but, surtout, de remédier à cet inconvénient en assurant une excellente étanchéité de la liaison établie entre les deux tronçons.

A cet effet, les tubes-guides du genre ci-dessus selon l'invention comprennent encore un ressaut annulaire de butée axiale prévu dans la face cylindrique interne du premier tronçon et ils sont essentiellement caractérisés en ce que l'armature rigide du joint à lèvre présente une forme telle qu'elle soit interposée axialement sans jeu entre le ressaut du premier tronçon et la collerette du second tronçon et en ce que la garniture élastique dudit joint comprend une portion interposée entre ladite armature et les deux tronçons tubulaires de façon à assurer l'étanchéité entre ces deux derniers.

Dans des modes de réalisation préférés, on a recours en outre à l'une et/ou à l'autre des dispositions suivantes :
- l'armature du joint présente en demi-section axiale la forme d'un S dont une extrémité est appliquée directement contre le ressaut du premier tronçon, le pan du S terminé par l'autre extrémité présentant un bombement appliqué directement contre la collerette du second tronçon,
- la portion, de l'armature du joint, correspondant au bombement selon l'alinéa précédent, constitue dans ledit joint un bourrelet annulaire continu,
- la portion, de l'armature du joint, correspondant à la zone centrale du S ci-dessus, forme un manchon cylindrique dont le diamètre extérieur est inférieur au diamètre intérieur du bout de cylindre de plus grand diamètre compris par le second tronçon,
- une seconde armature présentant en demi-section axiale la forme d'un L est rapportée sur l'armature du joint de façon à former une butée axiale pour le roulement de sortie de la boîte de vitesses.

L'invention vise également les joints à lèvre spéciaux équipant les tubes-guides ci-dessus décrits.

Elle comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Comme déjà annoncé plus haut, la figure 1, de ce dessin, représente schématiquement en coupe axiale un tube-guide conforme à l'art antérieur.

La figure 2 montre selon une coupe axiale partielle agrandie un tube-guide du genre ci-dessus établi selon l'invention.

On retrouve dans ce dernier :
- le premier tronçon tubulaire 1, ou "cage extérieure" du roulement de sortie de la boîte de vitesses,
- le second tronçon épaulé 3 comprenant un bout cylindrique 4 relativement court emboîté jointivement dans une portion terminale amincie du premier tronçon, un bout cylindrique 5 plus long et de plus petit diamètre servant de support à la butée d'embrayage, et une collerette intermédiaire de raccordement 6,
- le ressaut 7 pratiqué dans la face cylindrique interne de la cage 1 et correspondant à la ligne de séparation entre la portion amincie (à droite) et la portion plus épaisse (à gauche) de ce premier tronçon,
- l'extrémité 21, de la cage 1, recourbée aux fins de sertissage,
- et le joint d'étanchéité pour l'arbre rotatif de sortie de la boîte, joint comprenant une lèvre flexible interne 11, un ressort 22 pour appliquer cette lèvre sur cet arbre, et une armature.

Mais on ne trouve plus ici la rondelle métallique 8 ni la position en butée axiale directe de la tranche extrême du second tronçon 3 contre une telle rondelle.

En outre le joint à lèvre est conformé différemment.

L'armature 12 de ce joint est ici agencée de façon à assurer par elle-même une liaison rigide directe selon la direction axiale entre les deux tronçons 1 et 3.

A cet effet, cette armature 12 présente en demi-section axiale la forme d'un S dont une extrémité 13 est directement appliquée axialement contre le ressaut 7 alors que le pan contigu à son autre extrémité présente un bombement 14 directement appliqué axialement contre la collerette 6.

Ce bombement 14 correspond dans l'armature 12 à un bourrelet annulaire continu.

En outre la garniture élastique 15 du joint forme ici un revêtement extérieur de l'armature 12 interposé avec une légère compression entre cette armature et les deux tronçons 1 et 3.

En particulier une portion de ladite garniture 15 constitue un coussin ou bouchon annulaire propre à obturer de façon étanche l'embouchure interne P de l'interface cylindrique I compris entre les deux portions, des tronçons 1 et 3, emmanchées jointivement l'une dans l'autre.

La zone centrale de l'armature 12 constitue un manchon cylindrique 17 écarté radialement du bout de cylindre 4 qui l'entoure : l'intervalle annulaire qui sépare ces deux éléments est comblé par une portion 18, de la garniture 15, légèrement comprimée radialement.

Les différentes cotes sont choisies de façon telle qu'en fin de montage les portions 16 et 19, de ladite garniture 15, interposées axialement entre l'armature 12 et le second tronçon tubulaire 3, soient légèrement comprimées axialement.

Les deux morceaux de garniture correspondant respectivement à la lèvre 11 et aux coussins d'étanchéité 16,18,19 décrits ci-dessus, peuvent être ou non réalisés lors d'une même opération de moulage et vulcanisation.

Ils peuvent être ou non réunis l'un à l'autre par des gorges ou perforations appropriées évidées dans le bourrelet 14.

Enfin une seconde armature 20 présentant en demi-section axiale la forme d'un L, est rapportée contre le portion cylindrique 17 de façon à constituer une butée axiale pour les déplacements du roulement encagé dans le premier tronçon tubulaire 1.

En suite de quoi, et quel que soit le mode de réalisation adopté, on dispose finalement d'un tube-guide et d'un joint à lèvre dont les constitutions résultent suffisament de ce qui précède.

Ces ensembles présentent un certain nombre d'avantages par rapport à ceux antérieurement connus.

En particulier :
- l'étanchéité de la liaison mécanique établie entre les deux tronçons constitutifs du tube-guide est assurée d'excellente façon,
- cet avantage n'est pas obtenu au détriment de la transmission rigide à la boîte des efforts axiaux exercés sur la butée d'embrayage, efforts qui sont encore transmis exclusivement par des contacts métal/métal,
- la solution proposée peut être adoptée très facilement sur les tubes-guides existants : cette adoption peut même être effectuée sans aucune modification de ce tube-guide si la dimension axiale de l'ensemble composé par l'extrémité d'armature 13 et le coussin 16 est égale à l'épaisseur d'un disque 8 de l'art antérieur.

## Revendications

1. Tube-guide épaulé destiné à recevoir la portion, de l'arbre de transmission d'un véhicule, disposée entre la boîte de vitesses et l'embrayage, composé d'un premier tronçon tubulaire (1) propre à recevoir intérieurement le roulement (2) de sortie de la boîte et d'un second tronçon tubulaire épaulé (3) comprenant un bout de cylindre (4) relativement court emmanché jointivement dans le premier tronçon (1) et contenant un joint à lèvre lui-même composé d'une armature rigide (12) et d'une garniture élastique (15) et un bout de cylindre (5) relativement long et de plus petit diamètre que le précédent, propre à recevoir extérieurement le roulement de la butée d'embrayage, ces deux bouts étant raccordés l'un à l'autre par une collerette intermédiaire (6), la face cylindrique interne du premier tronçon comprenant un ressaut annulaire (7) de butée axiale, caractérisé en ce que l'armature rigide (12) du joint à lèvre présente une forme telle qu'elle soit interposée axialement sans jeu entre le ressaut (7) du premier tronçon (1) et la collerette (6) du second tronçon (3) et en ce que la garniture élastique (15) dudit joint comprend des portions (16, 18, 19) interposées entre ladite armature rigide (12) et les deux tronçons tubulaires (1, 3) de façon à assurer l'étanchéité entre ces deux derniers.

2. Tube-guide selon la revendication 1, caractérisé en ce que l'armture (12) du joint présente en demi-section axiale la forme d'un S dont une extrémité (13) est appliquée directement contre le ressaut (7) du premier tronçon, le pan du S terminé par l'autre extrémité présentant un bombement (14) appliqué directement conte la collerette (6) du second tronçon.

3. Tube-guide selon la revendication 2, caractérisé en ce que la portion, de l'armature (12) du joint, correspondant au bombement (14), constitue dans ce joint un bourrelet annulaire continu.

4. Tube-guide selon l'une quelconque des revendications 2 et 3, caractérisé en ce que la portion, de l'armature (12) du joint, correspondant à la zone centrale du S, forme un manchon cylindrique (17) dont le diamètre extérieur est inférieur au diamètre intérieur du bout de cylindre (4) de plus grand diamètre compris par le second tronçon.

5. Tube-guide selon l'une quelconque des précédentes revendications, caractérisé en ce qu'une seconde armature (20) présentant en demi-section axiale la forme d'un L est rapportée sur l'armature (12) du joint de façon à former une butée axiale pour le roulement de sortie (2) de la boîte de vitesses.

6. Joint d'étanchéité à lèvre propre à équiper un tube-guide et établi selon l'une quelconque des précédentes revendications.

## Claims

1. Shouldered guide tube for receiving the portion of a vehicle transmission shaft which is disposed between the gear box and the clutch, formed of a first tubular section (1) adapted to receive on the inside the output bearing (2) of the gear box and a second shouldered tubular section (3) comprising a relatively short cylinder portion (4) fitted jointingly into the first section (1) and containing a lipped seal which is itself formed of a rigid frame (12) and a resilient gasket (15) and a relatively long cylinder portion (5) of smaller diameter than the preceding one, adapted for receiving on the outside the clutch thrust bearing, these two portions being connected together by an intermediate collar (6), the internal cylindrical face of the first section comprising an annular axial abutment projection (7), characterized in that the rigid frame (12) of the lipped seal has a shape such that it is interposed axially without play between the projection (7) of the first section (1) and the collar (6) of the second section (3) and in that the resilient gasket (15) of said seal comprises portions (16, 18, 19) inserted between said rigid frame (12) and the two tubular sections (1, 3) so as to provide sealing therebetween.

2. Guide tube according to claim 1, characterized in that the frame (12) of the seal has in axial half section the form of an S, one end (13) of which is applied directly against the projection (7) of the first section, the portion of the S ended by the other end having a bulge (14) applied directly against the collar (6) of the second section.

3. Guide tube according to claim 2, characterized in that the portion of the frame (12) of the seal corresponding the bulge (14) forms in said seal a continuous annular rim.

4. Guide tube according to any one of claims 2 and 3, characterized in that the portion of the frame (12) of the seal corresponding to the central zone of said S forms a cylindrical sleeve (17) whose external diameter is less than the internal diameter of the larger diameter cylinder portion (4) forming part of the second section.

5. Guide tube according to any one of the preceding claims, characterized in that a second frame (12) having in axial half section the shape of an L is added to the frame (12) of the seal so as to form an axial abutment for the output bearing (2) of the gear box.

6. Lipped seal adapted for equipping a guide tube formed in accordance with any one of the preceding claims.

**Patentansprüche**

1. Ausrückkupplungsführungshülse zur Aufnahme des Teils der Antriebswelle eines Fahrzeuges, der zwischen dem Getriebe und der Kupplung angeordnet ist, wobei die Hülse aus folgenden Teilen besteht: einem ersten Rohrende (1) zur Aufnahme des Lagers (2) des Ausgangs des Getriebes und einem zweiten, mit einer Schulter versehenen Rohrende (3) mit einem verhältnismäßig kurzen zylindrischen Endabschnitt (4), der dicht in das erste Rohrende (1) eingepreßt ist und eine aus einem starren Werkstück (12) und einer elastischen Einlage (15) bestehende Lippendichtung enthält und mit einem verhältnismäßig langen zylindrischen Abschnitt (5), der einen kleineren Durchmesser hat als der Endabschnitt (4) und an dessen Außenfläche sich das Ausrücklager der Kupplung abstützt, wobei die beiden Abschnitte (4, 5) über einen zwischen ihnen angeordneten Kragen (6) miteinander verbunden sind und die innere zylindrische Oberfläche des ersten Rohrendes (1) einen ringförmigen Vorsprung (7) enthält, der einen axialen Anschlag bildet, dadurch gekennzeichnet, daß das starre Werkstück (12) der Lippendichtung eine solche Form hat, daß es in axialer Richtung ohne Spiel zwischen dem durch den ringförmigen Vorsprung (7) gebildeten Anschlag des ersen Rohrendes (1) und dem Kragen (6) des zweiten Rohrendes (3) liegt und daß die elastische Einlage (15) der Dichtung Abschnitte (16, 18, 19) enthält, die zwischen dem starren Werkstück (12) und den beiden Rohrenden (1, 3) liegen, um die Abdichtung zwischen diesen Enden zu gewährleisten.

2. Ausrückkupplungsführungshülse nach Anspruch 1, dadurch gekennzeichnet, daß das starre Werkstück (12) der Dichtung im axialen Halbschnitt gesehen die Form eines "S" hat, dessen einer Schenkel (13) direkt gegen den Vorsprung (7) des ersten Rohrendes gedrückt wird, während die Fläche des "S", die durch den anderen Schenkel gebildet wird, mit einer Wölbung (14) versehen ist, die direkt gegen den Kragen (6) des zweiten Rohrendes gedrückt wird.

3. Ausrückkupplungsführungshülse nach Anspruch 2, dadurch gekennzeichnet, daß der mit der Wölbung (14) versehene Abschnitt des starren Werkstückes (12) der Dichtung eine umlaufende ringförmige Wulst bildet.

4. Ausrückkupplungsführungshülse nach einem der Ansprüche 2 und 3, dadurch gekennzeichnet, daß der mittlere, zwischen den Schenkeln liegende Abschnitt des starren Werkstückes (12) eine zylindrische Buchse (17) bildet, deren Außendurchmesser kleiner ist als der Innendurchmesser des zylindrischen Endabschnittes (4) des zweiten Rohrendes.

5. Ausrückkupplungsführungshülse nach einem der vorhergehenden Ansprüche, dadurch gekennzeichnet, daß sie ein zweites Werkstück (20) enthält, das im axialen Halbschnitt gesehen die Form eines "L" hat und so an dem Werkstück (12) der Dichtung angebracht ist, daß es einen axialen Anschlag für das Lager (2) des Ausgangs des Getriebes bildet.

6. Lippendichtung für eine Ausrückkupplungsführungshülse, die gemäß einem der vorhergehenden Ansprüche ausgebildet ist.

# FIG.1.

# FIG.2.